Europäisches Patentamt

European Patent Office

Office européen des brevets

(11) Veröffentlichungsnummer: **0 427 262 A1**

# EUROPÄISCHE PATENTANMELDUNG

(21) Anmeldenummer: 90121409.8

(22) Anmeldetag: 08.11.90

(51) Int. Cl.5: **F02M 31/135, H05B 3/14**

(30) Priorität: 08.11.89 DD 334361

(43) Veröffentlichungstag der Anmeldung:
**15.05.91 Patentblatt 91/20**

(84) Benannte Vertragsstaaten:
**DE FR GB IT NL**

(71) Anmelder: **MESSGERÄTE GMBH MAGDEBURG**
**Strasse der DSF 124**
**W-3011 Magdeburg(DE)**

(72) Erfinder: **Gladigow, Herbert**
**Birkenweg 25**
**O-3090 Magdeburg(DE)**
Erfinder: **Heymann, Dieter**
**Berliner Chaussee 249**
**O-3025 Magdeburg(DE)**
Erfinder: **Papendieck, Wolfgang**
**Resedaweg 35**
**O-3033 Magdeburg(DE)**
Erfinder: **Heil, Ulrich**
**Johannes-Göderitz-Strasse 44**
**O-3038 Magdeburg(DE)**

Erfinder: **Giessler, Andreas**
**Bruno-Taut-Ring 4a**
**O-3016 Magdeburg(DE)**
Erfinder: **Mohs, Günter**
**Westring 4**
**O-3031 Magdeburg(DE)**
Erfinder: **Runge, Claus-Dieter**
**Beethovenstrasse 6c**
**O-3024 Magdeburg(DE)**
Erfinder: **Schild, Ursula**
**Arnold-Knoblauch-Strasse 3**
**O-3013 Magdeburg(DE)**
Erfinder: **Buhtz, Ralf**
**Röntgenstrasse 12**
**O-3080 Magdeburg(DE)**
Erfinder: **Borchardt, Thomas, Dipl.-Ing.**
**E.-Thälmann-Strasse 69**
**O-3600 Halberstadt(DE)**

(74) Vertreter: **Leiser, Gottfried, Dipl.-Ing. et al**
**Patentanwälte Prinz, Leiser, Bunke & Partner**
**Manzingerweg 7**
**W-8000 München 60(DE)**

(54) **Elektrisch beheizte Gemischaufbereitungseinrichtung mit PTC-Heizelementen.**

(57) Die elektrisch beheizte Gemischaufbereitungs-einrichtung ist zur Anordnung in Saugrohren von fremdgezündeten Brennkraftmaschinen bestimmt und enthält PTC-Heizelemente (1.1,1.2) sowie wärmetauschende Segmente (2,3,4), die aus einer Grundplatte mit stachelförmigen Erhebungen bestehen. Die wärmetauschenden Segmente (2,3,4) weisen Schachtelform auf, wobei die stachelförmigen Erhebungen die Schachtelwände bilden. Die Segmente sind derart ineinander verschachtelt, daß an jeder Seite jedes PTC-Heizelements (1.1,1.2) die Grundplatte eines wärmetauschenden Segments (2,3,4) angeordnet ist. Die Wärmekapazität und der reziproke Wärmewiderstand jedes Segments stehen zu der Wärmekapazität und dem reziproken Wärmewiderstand jedes anderen Segments in einem Verhältnis, das gleich oder annähernd gleich dem Verhältnis der Anzahl der an den Grundplatten der jeweiligen Segmente (2,3,4) kontaktierten PTC-Heizelemente (1.1,1.2) ist.

Fig.1

EP 0 427 262 A1

## ELEKTRISCH BEHEIZTE GEMISCHAUFBEREITUNGSEINRICHTUNG MIT PTC-HEIZELEMENTEN

Anwendungsgebiet der Erfindung

Die Erfindung dient der Gemischaufbereitung in Saugrohren von fremdgezündeten Brennkraftmaschinen in der Kaltstart-oder Warmlaufphase, insbesondere bei extremen Umgebungstemperaturen, wobei die von PTC-Heizelementen erzeugte Wärmeenergie ohne wesentliche Wärmeverluste zur Gemischvorwärmung nutzbar ist.

Die erfindungsgemäße Gemischaufbereitungseinrichtung ist ohne Veränderungen des Saugrohrs nachrüstbar.

Charakteristik des bekannten Standes der Technik

Es sind bereits technische Lösungen für elektrisch beheizte Gemischaufbereitungseinrichtungen mit PTC-Heizelementen bekannt, die ohne wesentliche konstruktive Änderungen am bestehenden Ansaugsystem in dieses eingesetzt werden können.

In den US-Patentschriften 4 424 787 und 4 756 294 sind Heizeinrichtungen beschrieben, bei denen die wärmeerzeugende PTC-Keramik gleichzeitig als Wärmetauscher ausgeführt ist. Die Wärmeübertragung an das Gemisch erfolgt hier durch direkten Kontakt des Gemisches mit der PTC-Keramik. Dieser direkte Gemischkontakt reduziert wesentlich die Lebensdauer derartiger Heizeinrichtungen. Ein weiterer Nachteil besteht darin, daß die PTC-Keramik sehr spröde ist. Dadurch kann es bei den vorliegenden extremen mechanischen und thermischen Beanspruchungen zu Brüchen der PTC-Keramik kommen, wodurch Schäden am Motor auftreten können.

Die genannten Nachteile wurden bei den in den US-Patentschriften 4 327 697, 4 416 242, 4 407 254, 4 399 796, 4 398 522, 4 395 994, 4 395 670, 4 425 899 und 4 489 232 beschriebenen Heizeinrichtungen vermieden. Hier sind die wärmeerzeugenden PTC-Heizelemente in abgeschlossenen, im allgemeinen hülsenförmigen Gehäusen angeordnet, wobei eine Seite der PTC-Heizelemente in direktem thermischen Kontakt mit der dem Gemisch zugewandten wärmetauschenden Gehäusefläche steht. Diese Anordnungen weisen jedoch den Nachteil auf, daß die von den PTC-Heizelementen erzeugte Wärme nur einseitig den wärmetauschenden Elementen der Heizeinrichtungen zugeführt wird. Dadurch bedingt ist es bei diesen Heizeinrichtungen trotz erheblichen konstruktiven Aufwandes zur elektrischen Kontaktierung der Heizelemente und zur thermischen und elektrischen Isolation der Heizeinrichtungen zum Vergaser bzw.

zur Saugrohrwand nicht möglich, die Heizleistung der PTC-Heizelemente optimal auszunutzen und eine unmittelbar nach dem Startvorgang einsetzende maximale Gemischheizung zu erzielen.

In der EP-A 0 267 645 wird eine Heizeinrichtung beschrieben, bei der die wärmeerzeugenden, scheibenförmigen PTC-Heizelemente mit einer Seite an einer als Wärmetauscher für das Gemisch ausgebildeten Wärmesenke befestigt sind. Die Wärmesenke ist mit einer elektrisch und thermisch isolierenden Zwischenlage auf dem Saugrohrboden angeordnet. Zwischen dem Saugrohrboden und der zweiten Seite der PTC-Heizelemente sind Federelemente angeordnet, die sowohl der elektrischen Kontaktierung dienen, als auch einen thermischen Kontakt zwischen den PTC-Heizelementen und dem Saugrohrboden herstellen. Dadurch treten neben dem bereits beschriebenen Nachteil, daß nur von einer Seite der PTC-Heizelemente die erzeugte Wärme an die wärmetauschenden Elemente der Heizeinrichtung zugeführt wird, Wärmeverluste zum Saugrohr auf. Ein weiterer Nachteil dieser Heizeinrichtung besteht darin, daß die Montage im Saugrohr nicht ohne mechanische Nachbearbeitung des Saugrohrbodens möglich ist. Ein gemeinsamer Nachteil aller bekannten, elektrisch beheizten Gemischaufbereitungseinrichtungen besteht darin, daß die angewandten konstruktiven Lösungen eine gezielte Beeinflussung der Wärmeübertragung an das Gemisch in Abhängigkeit von der Stellung der Drosselklappe im Teillastbereich des Motors nicht gestatten.

Ziel der Erfindung

Ziel der Erfindung ist es, die Nachteile des bekannten Standes der Technik zu vermeiden und eine elektrisch beheizte Gemischaufbereitungseinrichtung zu schaffen, die in kürzester Zeit die maximal von den PTC-Heizelementen erzeugbare Wärmemenge ohne wesentliche Wärmeverluste über wärmetauschende bruchsichere Segmente an das Gemisch abgeben kann und die ohne Veränderungen des Saugrohres nachrüstbar ist. Dadurch sollen beim Betrieb der Gemischaufbereitungseinrichtung in fremdgezündeten Brennkraftmaschinen die Schadstoffemission und der spezifische Kraftstoffverbrauch in der Warmlaufphase gesenkt, die Warmlaufeigenschaften des Motors verbessert und seine Lebensdauer erhöht werden, bei insgesamt geringerer Belastung des Bordnetzes.

Darlegung des Wesens der Erfindung

Der Erfindung liegt die Aufgabe zugrunde, eine elektrisch beheizte Gemischaufbereitungseinrichtung mit PTC-Heizelementen und wärmetauschenden bruchsicheren Segmenten in Saugrohren von fremdgezündeten Brennkraftmaschinen zu schaffen, wobei in kürzester Zeit die maximal von den PTC-Heizelementen erzeugbare Wärmemenge ohne wesentliche Wärmeverluste an das Brennstoff-Luft-Gemisch abgebbar ist.

Erfindungsgemäß wird die Aufgabe dadurch gelöst, daß an beiden Seiten der PTC-Heizelemente die Grundplatte der wärmetauschenden Segmente in direktem thermischen und elektrischen Kontakt angeordnet sind, wobei die wärmetauschenden Segmente bekannterweise aus einer Grundplatte mit stachelförmigen Erhebungen bestehen und die Segmente Schachtelform aufweisen. Die stachelförmigen Erhebungen bilden dabei die Schachtelwände der Segmente, welche ineinander verschachtelt sind. Erfindungsgemäß wird die Größe der Wärmekapazität und des reziproken Wärmewiderstandes des jeweiligen Segmentes vom Verhältnis der Anzahl der an der Grundplatte des jeweiligen Segmentes kontaktierten PTC-Heizelemente zur Anzahl der an den Grundplatten der anderen Segmente kontaktierten PTC-Heizelemente bestimmt. Das heißt, daß Wärmekapazität und reziproker Wärmewiderstand jedes Segmentes proportional oder annähernd proportional zur Anzahl der an beiden Seiten der Grundplatte des jeweiligen Segmentes kontaktierten PTC-Heizelemente sind. Damit wird erreicht, daß die gesamte von den PTC-Heizelementen erzeugte Wärmemenge beidseitig von den PTC-Heizelementen abgeführt wird und dabei in gleicher Zeiteinheit von beiden Seiten der PTC-Heizelemente eine annähernd gleich große Wärmemenge an die jeweiligen Segmente abgegeben wird. Das heißt, die von den PTC-Heizelementen erzeugte Wärmemenge kann nahezu vollständig und in kürzester Zeit über die Segmente an das Brennstoff-Luft-Gemisch abgegeben werden, da Wärmeverluste am Wärmeübergang von PTC-Heizelement zu wärmetauschendem Segment durch den direkten Kontakt der PTC-Heizelemente mit den wärmetauschenden Segmenten auf ein Minimum reduziert sind und durch die schachtelförmige Anordnung der wärmetauschenden Segmente eine optimale Wärmeübertragung an das Gemisch gewährleistet ist.

Ausführungsbeispiel

Die Erfindung soll anhand nachfolgendem Ausführungsbeispiel näher erläutert werden. Dabei zeigen:

Fig. 1 die Anordnung einer erfindungsgemäßen Gemischaufbereitungseinrichtung im Ansaugrohr und

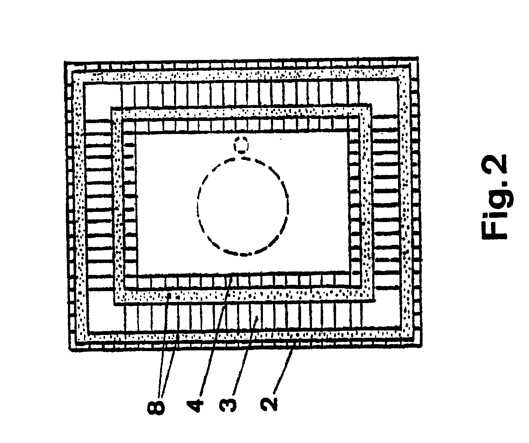

Fig. 2 eine Draufsicht auf eine erfindungsgemäße Gemischaufbereitungseinrichtung

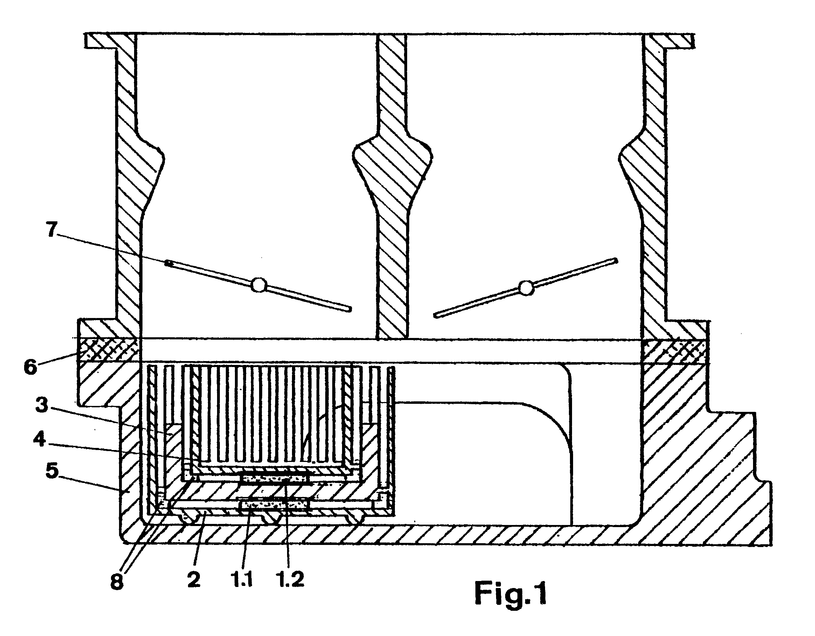

Gemäß Fig. 1 werden zwei PTC-Heizelemente 1.1 und 1.2 verwendet, welche zwischen den Grundplatten dreier wärmetauschender Segmente 2, 3 und 4 angeordnet sind. Die Segmente 2 und 4 sind mit dem Minuspol der Bordspannung und das Segment 3 ist mit dem Pluspol verbunden, so daß die im direkten elektrischen Kontakt zu den Grundplatten der Segmente 2, 3 und 4 stehenden PTC-Heizelemente 1 und 1.2 bei anliegender Bordspannung aufgeheizt werden. Die elektrischen Zuleitungen für die Segmente 2, 3 und 4 werden über die vorhandene Dichtung 6 zwischen Ansaugrohr und Drosselklappe 7 geführt und sind der einfacheren Darstellung wegen nicht eingezeichnet.

Die Segmente 2, 3 und 4 besitzen Schachtelform, wobei die senkrecht zur Grundplatte des jeweiligen Segmentes 2, 3 und 4 angeordneten stachelförmigen Erhebungen die Schachtelwände bilden. Die stachelförmigen Erhebungen dienen bekannterweise der Oberflächenvergrößerung der wärmetauschenden Segmente 2, 3 und 4 zur maximalen Wärmeübertragung an das Brennstoff-Luft-Gemisch. Zwischen den Segmenten 2 und 3 und den Segmenten 3 und 4 befindet sich jeweils ein elastisches, elektrisch isolierendes Dichtelement 8, das der Verbindung der Segmente 2, 3 und 4 zu einer montagefähigen Einheit dient und gleichzeitig die PTC-Heizelemente 1.1 und 1.2 vor direkter Berührung mit dem Brennstoff-Luft-Gemisch und damit vor unmittelbarem Kontakt mit flüssigen Kraftstoffteilchen schützt.

Das PTC-Heizelement 1.1 ist gemäß Fig. 1 zwischen den Grundplatten der Segmente 2 und 3 und das PTC-Heizelement 1.2 zwischen der Grundplatte der Segmente 3 und 4 in unmittelbarem elektrischen und wärmeleitenden Kontakt zu den jeweiligen Grundplatten der Segmente 2, 3 und 4 angeordnet. Damit sind an der Grundplatte des Segmentes 2 das PTC-Heizelement 1.1, an der Grundplatte des Segmentes 3 die beiden PTC-Heizelemente 1.1 und 1.2 und an der Grundplatte des Segmentes 4 das PTC-Heizelement 1.2 kontaktiert. Erfindungsgemäß beträgt somit das Verhältnis der Anzahl der an den Grundplatten der Segmente 2, 3 bzw. 4 kontaktierten PTC-Heizelemente 1:2:1 und das Verhältnis der Wärmekapazitäten und der reziproken Wärmewiderstände von Segment 2 zu Segment 3 und zu Segment 4 ebenfalls 1:2:1.

Durch dieses Verhältnis der Wärmekapazitäten und reziproken Wärmewiderstände der Segmente 2, 3 und 4 untereinander wird erreicht, daß die von beiden Seiten der PTC-Heizelemente 1.1 und 1.2 abgeführte Wärmemenge gleich groß ist und somit nahezu die gesamte von den PTC-Heizelementen 1.1 und 1.2 erzeugte Wärmeenergie an die Segmente 2, 3 und 4 und in kürzester Zeit an das Brennstoff-Luft-Gemisch abgegeben wird.

Das Segment 2 weist an der dem PTC-Heizelement 1.1 abgewandten Seite seiner Grundplatte drei Vorsprünge auf, welche der Erhöhung der Standsicherheit der Gemischaufbereitungseinrichtung auf dem Saugrohrboden 5 dienen. Die drei Vorsprünge stehen in direktem thermischen Kontakt zum Saugrohrboden 5, wobei der thermische Kontakt punktförmig begrenzt ist, so daß die Wärmeabführung an den Saugrohrboden 5 über diese Vorsprünge nur sehr gering ist und auf die Zeitdauer der Aufheizzeit der Segmente 2, 3 und 4 praktisch keinen Einfluß hat. Andererseits wird durch diese Vorsprünge im abgeschalteten Zustand der PTC-Heizelemente 1.1 und 1.2 gerade soviel Wärme vom Saugrohrboden 5 an die Gemischaufbereitungseinrichtung übertragen, daß die Gemischaufbereitungseinrichtung nicht als Kältepol im Ansaugrohr wirken kann.

Zur Verbesserung der Gemischaufbereitung sind die Grundplatten der Segmente 2, 3 und 4 in Richtung der stachelförmigen Erhebungen wannenförmig ausgebildet, wobei die Wannenränder als Abrißkanten 9 ausgestaltet sind. Durch die wannenförmige Ausbildung der Grundplatten der Segmente 2, 3 und 4 können sich darin im Brennstoff-Luft-Gemisch befindliche Kraftstofftröpfchen sammeln und teilweise verdampft werden. Auf den Grundplatten der Segmente 2, 3 und 4 verbleibende höhersiedende Bestandteile des Kraftstoffes werden durch die Strömung des Gemisches an den Abrißkanten 9 zerstäubt.

Eine weitere Verbesserung der Gemischaufbereitung wird dadurch erreicht, daß die stachelförmigen Erhebungen der Segmente 2, 3 und 4 auf der dem Gemischeintritt gegenüberliegenden Seite, entsprechend der Stellung der Drosselklappe 7 im Teillastbereich, dichter angeordnet sind als die in den anderen Bereichen der Segmente 2, 3 und 4. Damit wird eine Vergrößerung der wärmetauschenden Oberfläche auf der Seite der dichter stehenden stachelförmigen Erhebungen vorgenommen, so daß eine dem Betriebszustand der Brennkraftmaschine im Teillastbereich angepaßte Gemischaufbereitung möglich ist.

Zur Verbesserung des mechanischen Schutzes der Gemischaufbereitungseinrichtung gegen eventuelle Fremdkörper sind die stachelförmigen Erhebungen des Segmentes 3 kürzer als die stachelförmigen Erhebungen der Segmente 2 und 4, so daß metallene Fremdkörper keinen Kurzschluß zwischen den Segmenten 2 und 3 bzw. 3 und 4 hervorrufen können.

Die Herstellung einer montagefähigen Einheit aus den einzelnen Segmenten 2, 3 und 4 kann auch durch andere elektrisch isolierte Befestigungselemente, wie Niete, Schrauben, Verzapfungen usw. erfolgen.

Die Befestigung der Gemischaufbereitungseinrichtung im Saugrohr erfolgt auf bekannte Art und Weise mittels mechanischer Elemente mit Klemmwirkung und wurde wegen Vereinfachung der Zeichnung in Fig. 1 nicht dargestellt.

Die Gemischaufbereitungseinrichtung kann sowohl unterhalb der ersten Vergaserstufe als auch unterhalb beider Vergaserstufen angeordnet werden. Durch die konstruktive Ausführung der erfindungsgemäßen Gemischaufbereitungseinrichtung ist diese ohne Nachbearbeitung des Saugrohres bzw. des Saugrohrbodens 5 in fremdgezündeten Brennkraftmaschinen einsetzbar und damit als Nachrüstsatz geeignet.

## Ansprüche

1. Elektrisch beheizte Gemischaufbereitungseinrichtung mit PTC-Heizelementen und wärmetauschenden Segmenten in Saugrohren von fremdgezündeten Brennkraftmaschinen, wobei die wärmetauschenden Segmente aus einer Grundplatte mit stachelförmigen Erhebungen bestehen, **dadurch gekennzeichnet**, daß an beiden Seiten der PTC-Heizelemente die Grundplatten der wärmetauschenden Segmente angeordnet sind, daß die Segmente Schachtelform aufweisen, wobei die stachelförmigen Erhebungen die Schachtelwände bilden, daß die Segmente ineinander verschachtelt sind, und daß Wärmekapazität und reziproker Wärmewiderstand jedes Segmentes zu Wärmekapazität und reziprokem Wärmewiderstand jedes anderen Segmentes in einem Verhältnis stehen, das gleich oder annähernd gleich dem Verhältnis der Anzahl der an den Grundplatten der jeweiligen Segmente kontaktierten PTC-Heizelemente ist.

2. Elektrisch beheizte Gemischaufbereitungseinrichtung nach Anspruch 1, **dadurch gekennzeichnet**, daß an der dem Saugrohrboden unmittelbar gegenüberliegenden Grundplatte dieses Segmentes Vorsprünge angeordnet sind, die in direktem thermischen Kontakt zum Saugrohrboden stehen.

3. Elektrisch beheizte Gemischaufbereitungseinrichtung nach Anspruch 1 oder 2, **dadurch gekennzeichnet**, daß die Grundplatten der Segmente in Richtung der stachelförmigen Erhebungen wannenförmig ausgebildet sind, wobei die Wannenränder als Abrißkanten ausgestaltet sind.

4. Elektrisch beheizte Gemischaufbereitungseinrichtung nach einem der Ansprüche 1 bis 3, **dadurch gekennzeichnet**, daß die stachelförmigen Erhebungen der das Plus-Potential der Batterie führenden Segmente kürzer sind als die übrigen Segmente.

5. Elektrisch beheizte Gemischaufbereitungseinrichtung nach einem der Ansprüche 1 bis 4, **dadurch gekennzeichnet,** daß die dem Gemischeintritt, welcher durch die Stellung der Drosselklappe im Teillastbereich gekennzeichnet ist, unmittelbar gegenüberliegenden stachelförmigen Erhebungen dichter angeordnet sind als diejenigen in den anderen Bereichen der Segmente.

**Fig.1**

EP 0 427 262 A1

**Fig. 2**

Europäisches
Patentamt

**EUROPÄISCHER
RECHERCHENBERICHT**

Nummer der Anmeldung

**EP 90 12 1409**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 387 291   (KEPPEL)<br>* Spalte 2, Zeile 20 - Spalte 3, Zeile 51; Figuren 2,3 *<br>– – – | 1 | F 02 M<br>31/135<br>H 05 B 3/14 |
| A | FR-A-2 356 823   (AUDI NSU AUTO UNION AG)<br>* Seite 1, Zeile 19 - Seite 2, Zeile 5; Seite 5; Figuren 1-4 *<br>– – – | 1 | |
| A,D | US-A-4 327 697   (WADA et al.)<br>– – – – – | | |

| | |
|---|---|
| | RECHERCHIERTE SACHGEBIETE (Int. Cl.5) |
| | F 02 M<br>H 05 B |

Der vorliegende Recherchenbericht wurde für alle Patentansprüche erstellt

| Recherchenort | Abschlußdatum der Recherche | Prüfer |
|---|---|---|
| Den Haag | 01 Februar 91 | KLINGER T.G. |